(19) **Europäisches Patentamt / European Patent Office / Office européen des brevets**

(11) **EP 4 672 473 A1**

(12) **EUROPEAN PATENT APPLICATION**
published in accordance with Art. 153(4) EPC

(43) Date of publication:
**31.12.2025  Bulletin 2026/01**

(21) Application number: **24806045.1**

(22) Date of filing: **05.01.2024**

(51) International Patent Classification (IPC):
**H01M 50/40** (2021.01)

(52) Cooperative Patent Classification (CPC):
Y02E 60/10

(86) International application number:
**PCT/CN2024/070826**

(87) International publication number:
**WO 2024/234681 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2023  CN 202310551386**

(71) Applicant: **Contemporary Amperex Technology
Co., Limited
Ningde City, Fujian 352100 (CN)**

(72) Inventors:
- **LANG, Yaqiang
  Ningde, Fujian 352100 (CN)**
- **HE, Jianfu
  Ningde, Fujian 352100 (CN)**
- **SHI, Haihong
  Ningde, Fujian 352100 (CN)**
- **YE, Yonghuang
  Ningde, Fujian 352100 (CN)**

(74) Representative: **Ran, Handong et al
Maucher Jenkins
Seventh Floor Offices
Artillery House
11-19 Artillery Row
London SW1P 1RT (GB)**

(54) **BATTERY CELL, BATTERY AND ELECTRIC DEVICE**

(57)    Disclosed in the present application are a battery cell, a battery and an electric device. The battery cell comprises a casing, an electrode assembly and a buffer member, wherein the casing is provided with a mounting cavity; the electrode assembly is located in the mounting cavity, and is provided with side faces distributed in the thickness direction of the electrode assembly; the buffer member is located in the mounting cavity, and comprises a first buffer portion and a second buffer portion; at least one edge portion of the first buffer portion is connected to the second buffer portion; the first buffer portion at least partially covers a central area of each side face; and the second buffer portion covers an edge area of the side face. Under the same pressure, the amount of compression of the first buffer portion is larger than that of the second buffer portion, and the first buffer portion is more prone to pressing deformation than the second buffer portion, such that a larger expansion force in the central area is reduced more obviously than a smaller expansion force in the edge area, thereby alleviating the non-uniformity of the distribution of the expansion forces in the central area and the edge area of each side face, and improving the cycle performance of the battery cell and prolonging the service life thereof.

FIG. 5

# Description

This application claims priority to Chinese Patent Application No. 202310551386.4, filed on May 16, 2023 and entitled "BATTERY CELL, BATTERY AND ELECTRIC DEVICE", which is incorporated herein by reference in its entirety.

## TECHNICAL FIELD

This application relates to the field of battery expansion technology, and in particular, to a battery cell, a battery, and an electric apparatus.

## BACKGROUND

A battery is typically provided with one or more battery cells. During the charge-discharge cycles of a battery cell, an electrode assembly within the battery cell expands accordingly. However, the expansion forces on side surfaces of the electrode assembly are usually unevenly distributed, which may cause lithium precipitation in electrode plates within the electrode assembly, affecting cycling performance of the battery cell.

The above statements are provided solely to offer background information related to this application and do not necessarily constitute the prior art.

## SUMMARY

An object of embodiments of this application is to provide a battery cell, a battery, and an electric apparatus, so as to mitigate uneven distribution of expansion forces on side surfaces of an electrode assembly in the battery cell.

The technical solutions adopted in the embodiments of this application are as follows.

According to a first aspect, a battery cell is provided. The battery cell includes an outer shell, an electrode assembly, and a buffer member. The outer shell has a mounting cavity. The electrode assembly is located in the mounting cavity, the electrode assembly having a side surface distributed in a thickness direction of the electrode assembly. The buffer member is located in the mounting cavity, and the buffer member includes a first buffer portion and a second buffer portion, the first buffer portion having at least one edge portion connected to the second buffer portion, the first buffer portion at least partially covering a central region of the side surface, and the second buffer portion covering an edge region of the side surface. Under the same pressure, a compression amount of the first buffer portion is greater than a compression amount of the second buffer portion.

In the battery cell of embodiments of this application, under the same pressure, the compression amount of the first buffer portion is greater than the compression amount of the second buffer portion, making the first buffer portion more easily deformed under compression compared to the second buffer portion. The edge region with a smaller expansion force compresses the second buffer portion, while the central region with a larger expansion force compresses the first buffer portion, resulting in a more significant reduction in the larger expansion force on the central region compared to the smaller expansion force on the edge region. This reduces the difference between the expansion force in the central region of the side surface and the expansion force in the edge region of the side surface, mitigates uneven expansion force distribution between the central region and the edge region, and reduces the risk of lithium precipitation in the electrode assembly, thereby improving the cycling performance and service life of the battery cell.

In one embodiment, under a pressure of 0.5 MPa to 1 MPa, a compression rate of the first buffer portion is greater than or equal to 40%. This configuration enables the first buffer portion to effectively buffer the central region, reducing the expansion force in the central region.

In one embodiment, under a pressure of 0.5 MPa, the compression rate of the first buffer portion is greater than or equal to 40%; and/or under a pressure of 0.8 MPa, the compression rate of the first buffer portion is greater than or equal to 60%; and/or under a pressure of 1 MPa, the compression rate of the first buffer portion is greater than or equal to 85%. The compression rate of the first buffer portion can be flexibly set to meet buffering requirements under different expansion forces, better mitigating uneven expansion force distribution.

In one embodiment, under a pressure of 0.5 MPa to 1 MPa, a compression rate of the second buffer portion is greater than or equal to 20%. This configuration enables the second buffer portion to effectively buffer the edge region, reducing the expansion force in the edge region.

In one embodiment, under a pressure of 0.5 MPa, the compression rate of the second buffer portion is greater than or equal to 20%; and/or under a pressure of 0.8 MPa, the compression rate of the second buffer portion is greater than or equal to 30%; and/or under a pressure of 1 MPa, the compression rate of the second buffer portion is greater than or equal to 50%. This allows flexible setting of the compression rate of the second buffer portion to meet buffering requirements under different expansion forces, better mitigating uneven expansion force distribution.

In one embodiment, a porosity of the first buffer portion ranges from 40% to 95%. On one hand, the first buffer portion has pores, which improves electrolyte circulation, enhancing the performance of the battery cell. On the other hand, this provides the first buffer portion with good compression performance, effectively reducing the expansion force in the central region and reducing the risk of lithium precipitation.

In one embodiment, the porosity of the first buffer portion ranges from 75% to 90%, enabling the first buffer portion to have better compression performance, more effectively reducing the expansion force in the central region, and reducing the risk of lithium precipitation.

In one embodiment, a porosity of the second buffer portion ranges from 5% to 60%. On one hand, the second buffer portion has pores, which improves electrolyte circulation, enhancing the performance of the battery cell. On the other hand, this provides the second buffer portion with certain compression performance, mitigating the expansion force in the edge region and reducing the risk of lithium precipitation.

In one embodiment, the porosity of the second buffer portion ranges from 10% to 40%, enabling the second buffer portion to have good compression performance, more effectively mitigating the expansion force in the edge region, and reducing the risk of lithium precipitation.

In one embodiment, an elastic modulus of the first buffer portion is less than an elastic modulus of the second buffer portion, enabling the first buffer portion to be more easily compressed than the second buffer portion, better mitigating the difference in expansion forces between the central region and the edge region.

In one embodiment, a material of the first buffer portion is the same as a material of the second buffer portion; or a material of the first buffer portion is different from a material of the second buffer portion. The materials of the first buffer portion and the second buffer portion can be flexibly selected, facilitating manufacturing.

In one embodiment, an area of the first buffer portion is $S_1$, a sum of areas of all second buffer portions is $S_2$, and $0.3 \leq S_1/(S_1+S_2) \leq 0.9$. This implements proper allocation of the area of the first buffer portion and the area of the second buffer portion, effectively mitigating uneven expansion force distribution on the side surfaces.

In one embodiment, $0.5 \leq S_1/(S_1+S_2) \leq 0.85$. This implements proper allocation of the area of the first buffer portion and the area of the second buffer portion, more effectively mitigating uneven expansion force distribution on the side surfaces.

In one embodiment, a thickness of the first buffer portion in an uncompressed state is greater than a thickness of the second buffer portion in an uncompressed state. This enables the first buffer portion to provide a larger buffering space for the central region with a larger expansion force compared to a buffering space provided by the second buffer portion for the edge region with a smaller expansion force, thereby more effectively mitigating uneven expansion force distribution on the side surfaces.

In one embodiment, a thickness of the mounting cavity is $T_1$, a thickness of the electrode assembly is $T_2$, a quantity of electrode assemblies is $N_1$, a quantity of buffer members is $N_2$, and a thickness of the first buffer portion in an uncompressed state is $T_3$, where $0.85 \leq (N_1{*}T_2 +N_2{*}T_3)/T_1 \leq 0.95$. This design allows the electrode assembly and the buffer member to be smoothly installed in the outer shell. Moreover, the electrode assembly and the buffer member can fill most of the space in the mounting cavity, ensuring stable positioning of the electrode assembly and the buffer member within the outer shell.

In one embodiment, a width of the buffer member is $H_1$, a width of the first buffer portion is $H_2$, and $3.5$ mm $\leq H_1{-}H_2 \leq 5.5$ mm. This enables both the first buffer portion and the second buffer portion to have appropriate widths, mitigating uneven expansion force distribution on the side surfaces.

In one embodiment, any one edge portion of the first buffer portion is connected to the second buffer portion; or two adjacent edge portions of the first buffer portion are each connected to the second buffer portion; or two opposite edge portions of the first buffer portion are each connected to the second buffer portion; or any three edge portions of the first buffer portion are each connected to the second buffer portion; or four edge portions of the first buffer portion are each connected to the second buffer portion. This design allows flexible distribution of the second buffer portion relative to the first buffer portion, supporting adaptation to different types of battery cells to better mitigate uneven expansion force distribution and reduce the risk of lithium precipitation.

In one embodiment, the electrode assembly includes a main body portion, a positive electrode tab, and a negative electrode tab, the positive electrode tab and the negative electrode tab being connected to a same end of the main body portion; and an edge portion of the first buffer portion near the positive electrode tab is connected to the second buffer portion. The second buffer portion can mitigate the difference in expansion forces between the edge region near the positive electrode tab and the central region, mitigating uneven expansion force distribution on the side surfaces and reducing the risk of lithium precipitation.

In one embodiment, the electrode assembly includes a main body portion, a positive electrode tab, and a negative electrode tab; the main body portion has a first end and a second end arranged opposite each other, the first end being connected to the positive electrode tab, and the second end being connected to the negative electrode tab; an edge portion of the first buffer member near the positive electrode tab is connected to the second buffer portion, and an edge portion of the first buffer member near the negative electrode tab is connected to the second buffer portion. One of the two second buffer portions mitigates the difference in expansion forces between the edge region near the positive electrode tab and the central region, and the other mitigates the difference in expansion forces between the edge region near the negative electrode tab and the central region, thereby mitigating uneven expansion force distribution on the side surfaces and reducing the risk of lithium precipitation.

In one embodiment, another two opposite edge portions of the first buffer portion are each connected to the second buffer portion. When the side surface expands, the four edge regions around the side surface respectively compress the four second buffer portions, mitigating the difference in expansion forces between the four edge regions and the central region, more effectively mitigating uneven expansion force distribution on the side surface, and reducing the risk of lithium precipitation.

In one embodiment, the four second buffer portions are sequentially connected end to end to be annularly arranged around the first buffer portion. The junctions of adjacent edge regions can each compress the second buffer portion, more comprehensively mitigating the difference in expansion forces between the edge regions and the central region, more effectively mitigating uneven expansion force distribution on the side surfaces, and reducing the risk of lithium precipitation.

In one embodiment, the main body portion includes a positive electrode plate, a negative electrode plate, and a separator, the positive electrode plate, the negative electrode plate, and the separator being wound or stacked, where the positive electrode plate is connected to the positive electrode tab, and the negative electrode plate is connected to the negative electrode tab; the first buffer portion at least covers a projection region of the positive electrode plate on the side surface. This enables the first buffer portion to cover the entire portion of the positive electrode plate opposite the side surface, allowing the entire central region corresponding to the positive electrode plate on the side surface to compress the first buffer portion, thereby more effectively mitigating the expansion force in the central region and mitigating uneven expansion force distribution across the entire side surface.

In one embodiment, the buffer member at least covers a projection region of the negative electrode plate on the side surfaces. This allows the portion of the negative electrode plate protruding beyond the positive electrode plate to also compress the buffer member, implementing more comprehensive mitigation of expansion force on the side surfaces and improving the effect of mitigating uneven expansion force distribution.

In one embodiment, a width of the separator is $H_3$, a width of the buffer member is $H_1$, and $-2.5$ mm $\leq H_3$-$H_1 \leq 14.5$ mm. Proper setting of the width of the buffer member allows effective mitigation of the expansion force of the electrode assembly, and reduces the risk of interference between the buffer member and the outer shell.

In one embodiment, $6.5$ mm $\leq H_3$-$H_1 \leq 10$ mm. The buffer member protrudes beyond the separator, with a reasonable protrusion length that is neither too short to effectively cover the negative electrode plate nor too long to increase the risk of interference with components such as an end cover.

In one embodiment, the buffer member is located between the side surface and the outer shell. With the buffer member located between the outer shell and the side surface, when the side surface expands toward the outer shell, the buffer member can be compressed, thereby mitigating the expansion force of the side surface.

In one embodiment, the electrode assembly is provided in plurality, and the buffer member is located between two adjacent electrode assemblies. When two adjacent electrode assemblies expand, they can compress the buffer member located therebetween, mitigating the expansion force between the two adjacent electrode assemblies, and improving the performance of the battery cell.

According to a second aspect, a battery is provided, including the foregoing battery cell.

The battery in the embodiments of this application adopts the foregoing battery cell. Such battery cell has good cycling performance and service life, improving use performance and service life of the battery.

According to a third aspect, an electric apparatus is provided, including the foregoing battery.

The electric apparatus in the embodiments of this application adopts the foregoing battery. Such battery has a long service life and good performance, improving performance of the electric apparatus.

## BRIEF DESCRIPTION OF DRAWINGS

To more clearly illustrate the technical solutions in the embodiments of this application, the drawings required for describing the embodiments or the prior art are briefly introduced below. It is apparent that the drawings described below are only some embodiments of this application, and those of ordinary skill in the art can obtain other drawings based on these drawings without creative efforts.

FIG. 1 is a schematic structural diagram of a vehicle according to an embodiment of this application.
FIG. 2 is a schematic structural diagram of a battery according to an embodiment of this application.
FIG. 3 is a schematic structural diagram of a battery cell according to an embodiment of this application.
FIG. 4 is an exploded view of the battery cell shown in FIG. 3.
FIG. 5 is an exploded view of an electrode assembly and a buffer member shown in FIG. 4.
FIG. 6 is a schematic structural diagram of a buffer member according to an embodiment of this application.
FIG. 7 is a schematic structural diagram of a buffer member according to another embodiment of this application.
FIG. 8 is a schematic structural diagram of a wound electrode assembly according to an embodiment of this application.
FIG. 9 is a schematic structural diagram of a stacked electrode assembly according to another embodiment of this application.
FIG. 10 is a schematic structural diagram of a battery cell according to another embodiment of this application.
FIG. 11 is a cross-sectional view along line A-A in FIG. 10.
FIG. 12 is a cross-sectional view of a battery cell according to still another embodiment of this application.
FIG. 13 is a cross-sectional view of a battery cell according to still another embodiment of this application.

Description of reference signs:

1000, vehicle; 1100, battery; 1200, controller; 1300, motor; 10, casing; 11, first portion; 12, second portion; 20, battery cell; 21, outer shell; 211, housing; 2111, mounting cavity; 212, end cover; 22, electrode assembly; 221, main body portion; 222, positive electrode tab; 223, negative electrode tab; 2211, positive electrode plate; 2212, negative electrode plate; 2213, separator; 2201, side surface; 22011, central region; 22012, edge region; 23, electrode terminal; 24, pressure relief mechanism; 25, buffer member; 251, first buffer portion; and 252, second buffer portion.

## DESCRIPTION OF EMBODIMENTS

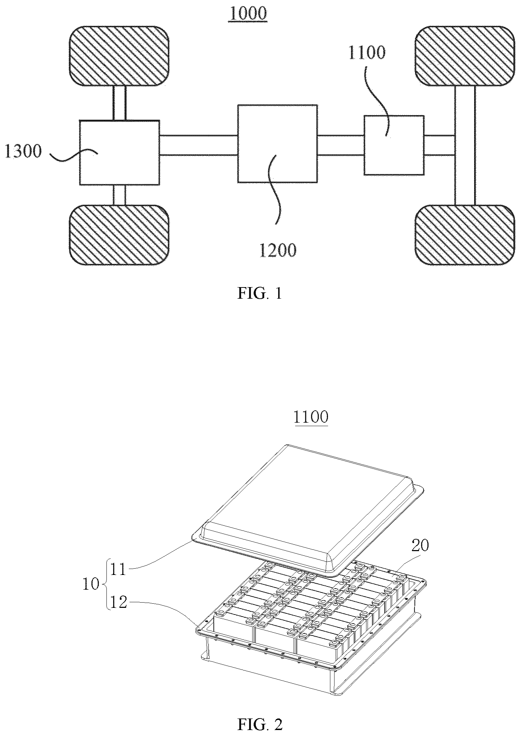

The embodiments of this application are described in detail below, and examples of the embodiments are illustrated in FIGs. 1 to 13, where the same or similar reference numerals denote the same or similar elements or elements having the same or similar functions throughout. The embodiments described below with reference to FIGs. 1 to 13 are exemplary and intended to explain this application, and should not be construed as limiting this application.

In the description of this application, it should be understood that the terms "length", "width", "upper", "lower", "front", "rear", "left", "right", "vertical", "horizontal", "top", "bottom", "inner", "outer", and the like indicate orientations or positional relationships based on those shown in the drawings, and are used only for convenience in describing this application and simplifying the description, rather than indicating or implying that the referred device or element must have a specific orientation, be constructed, and operated in a specific orientation, and thus should not be construed as limiting this application.

Furthermore, the terms "first" and "second" are used for descriptive purposes only and should not be construed as indicating or implying relative importance or implicitly indicating the number of technical features indicated. Thus, a feature defined as "first" or "second" may explicitly or implicitly include one or more of such features. In the description of this application, "a plurality of" means two or more, unless specifically defined otherwise.

In this application, unless otherwise expressly specified and limited, terms such as "mounted", "connected", "coupled", "fixed", and the like should be understood in a broad sense, for example, as a fixed connection, a detachable connection, or an integral connection; a mechanical connection or an electrical connection; a direct connection or an indirect connection through an intermediate medium; or an internal communication between two elements or an interaction relationship between two elements. For those of ordinary skill in the art, the specific meanings of the above terms in this application can be understood according to specific circumstances.

In the description of this application, it should be noted that the term "and/or" is merely an association describing associated objects, indicating that three relationships may exist. For example, A and/or B may indicate: A exists alone, A and B exist simultaneously, and B exists alone.

It should also be noted that, in the embodiments of this application, the same reference numerals denote the same components or parts. For identical parts in the embodiments of this application, reference numerals may be marked only for one part or component as an example in the drawings, and it should be understood that the reference numerals are equally applicable to other identical parts or components.

In this application, terms such as "one embodiment", "some embodiments", "example", "specific example", or "some examples" mean that a specific feature, structure, material, or characteristic described in connection with the embodiment or example is included in at least one embodiment or example of this application. In this specification, schematic representations of the above terms do not necessarily refer to the same embodiment or example. Moreover, the specific features, structures, materials, or characteristics described may be combined in any suitable manner in any one or more embodiments or examples. Furthermore, those skilled in the art may combine and integrate different embodiments or examples and features of different embodiments or examples described in this specification, provided they do not conflict with each other.

In this application, for convenience of description, the Z-axis in the drawings represents the up-down direction, with the positive direction of the Z-axis indicating up and the negative direction indicating down; the Y-axis in the drawings represents the left-right direction, with the positive direction of the Y-axis indicating left and the negative direction indicating right; and the X-axis in the drawings represents the front-rear direction, with the positive direction of the X-axis indicating front and the negative direction indicating rear.

Currently, from the perspective of market trends, the application of batteries is becoming increasingly widespread. Batteries are not only used in energy storage power systems such as hydropower, thermal power, wind power, and solar power plants, but also widely applied in electric vehicles such as electric bicycles, electric motorcycles, and electric cars, as well as in military equipment, aerospace, and other fields. With the continuous expansion of battery application fields, the market demand for batteries is also steadily growing.

A battery is typically provided with one or more battery cells. During the charge-discharge cycles of a battery cell, an electrode assembly within the battery cell also expands. However, the expansion forces on side surfaces of the electrode assembly are usually unevenly distributed, which may cause lithium precipitation in electrode plates within the electrode assembly, affecting cycling performance of the battery cell.

During the charge-discharge cycles of a battery, active ions (for example, lithium ions) in the electrode assembly continuously deintercalate from the positive electrode plate and intercalate into the negative electrode plate, increasing the spacing between negative electrode plates, further causing the electrode assembly to expand. This expansion is particularly prominent in the thickness direction of the electrode assembly, causing the electrode assembly to undergo the most obvious expansion and the greatest expansion force on the side surfaces distributed in its thickness direction. However, due to factors such as the outer shell structure of the battery cell or the distribution of active ions on the electrode plates in the electrode assembly, the expansion force in the central region of the side surfaces is typically significantly greater than the expansion force in the edge regions. Moreover, a large difference between the expansion force in the central region and the expansion force in the edge regions leads to uneven expansion force distribution on the side surfaces, which easily causes lithium precipitation in the electrode assembly, thereby affecting cycling performance of the battery.

To mitigate the issue of uneven expansion forces on the side surfaces of the electrode assembly, a battery cell is designed. The battery cell includes an outer shell, an electrode assembly, and a buffer member. The outer shell has a mounting cavity, and the electrode assembly and the buffer member are located in the mounting cavity. The buffer member includes a first buffer portion and a second buffer portion, the first buffer portion having at least one edge portion connected to the second buffer portion, the first buffer portion at least partially covering a central region of the side surfaces, and the second buffer portion covering an edge region of the side surfaces. When the side surface expands, the central region compresses the first buffer portion to cause elastic deformation, and the edge region compresses the second buffer portion to cause elastic deformation. The elastic deformation of the first buffer portion and the elastic deformation of the second buffer portion can absorb the expansion force in the central region and the expansion force in the edge region, respectively, thereby reducing the expansion force in the central region and the expansion force in the edge region, and reducing the risk of wrinkling of the electrode plates in the electrode assembly. Under a same pressure, a compression amount of the first buffer portion is greater than a compression amount of the second buffer portion, making the first buffer portion more easily deformed under compression compared to the second buffer portion. The edge region with a smaller expansion force compresses the second buffer portion, while the central region with a larger expansion force compresses the first buffer portion, resulting in a more significant reduction in the larger expansion force on the central region compared to the smaller expansion force on the edge region. This reduces the difference between the expansion force in the central region of the side surfaces and the expansion force in the edge region of the side surfaces, mitigates uneven expansion force distribution between the central region and the edge region, and reduces the risk of lithium precipitation in the electrode assembly, thereby improving the cycling performance and service life of the battery cell.

For ease of description, the following embodiments take a vehicle 1000 as an example of an electric apparatus according to an embodiment of this application.

Referring to FIG. 1, FIG. 1 is a schematic structural diagram of a vehicle 1000 according to some embodiments of this application. The vehicle 1000 may be a fossil fuel vehicle, a gas vehicle, or a new energy vehicle, where the new energy vehicle may be a battery electric vehicle, a hybrid vehicle, or a range-extended electric vehicle. A battery 1100 is provided inside the vehicle 1000, and the battery 1100 may be disposed at the bottom, front, or rear of the vehicle 1000. The battery 1100 may be used to supply power to the vehicle 1000, for example, as an operational power source for the vehicle 1000. The vehicle 1000 may further include a controller 1200 and a motor 1300, where the controller 1200 is configured to control the battery 1100 to supply power to the motor 1300, for example, to meet the power requirements for starting, navigating, and driving the vehicle 1000.

In some embodiments of this application, the battery 1100 may serve not only as an operational power source for the vehicle 1000 but also as a driving power source for the vehicle 1000, replacing or partially replacing fuel or natural gas to provide driving power for the vehicle 1000.

Referring to FIG. 2, in an embodiment of the battery 1100, the battery 1100 includes a casing 10 and a battery cell 20, with the battery cell 20 accommodated in the casing 10. The casing 10 is configured to provide an accommodation space for the battery cell 20, and the casing 10 may adopt multiple structures. In some embodiments, the casing 10 may include a first portion 11 and a second portion 12, where the first portion 11 and the second portion 12 cover each other, and the first portion 11 and the second portion 12 together define an accommodation space for accommodating the battery cell 20. The second portion 12 may be a hollow structure with an opening at one end, and the first portion 11 may be a plate-like structure, with the first portion 11 covering the opening side of the second portion 12, so that the first portion 11 and the second portion 12 together define the accommodation space. Alternatively, both the first portion 11 and the second portion 12 may be hollow structures with an opening on one side, with the opening side of the first portion 11 covering the opening side of the second portion 12. Certainly, the casing 10 formed by the first portion 11 and the second portion 12 may be of multiple shapes, such as a cylinder or a cuboid.

In the battery 1100, there may be multiple battery cells 20, and the multiple battery cells 20 may be connected in series, parallel, or series-parallel, where being connected in series-parallel means a combination of series and parallel connections of the multiple battery cells 20.

In one embodiment, the multiple battery cells 20 may be directly connected in series, parallel, or series-parallel, and the entirety formed by the multiple battery cells 20 is accommodated in the casing 10. Certainly, the battery 1100 may be formed by multiple battery cells being connected in series, parallel, or series-parallel first to form a battery module and then multiple battery modules being connected in series, parallel, or series-parallel to form an entirety which is accommodated in the casing 10. The battery 1100 may further include other structures, for example, a busbar component for implementing electrical connections between the multiple battery cells 20.

Each battery cell 20 may be a secondary battery or a primary battery, or may be a lithium-sulfur battery, a sodium-ion battery, or a magnesium-ion battery, but is not limited thereto. The battery cell 20 may be of a cylindrical, flat, cuboid, or other shapes.

In another embodiment of the battery 1100, the battery 1100 may not include the casing 10; instead, multiple battery cells 20 are electrically connected and assembled into an entirety through necessary fixing structures for installation in an electric apparatus.

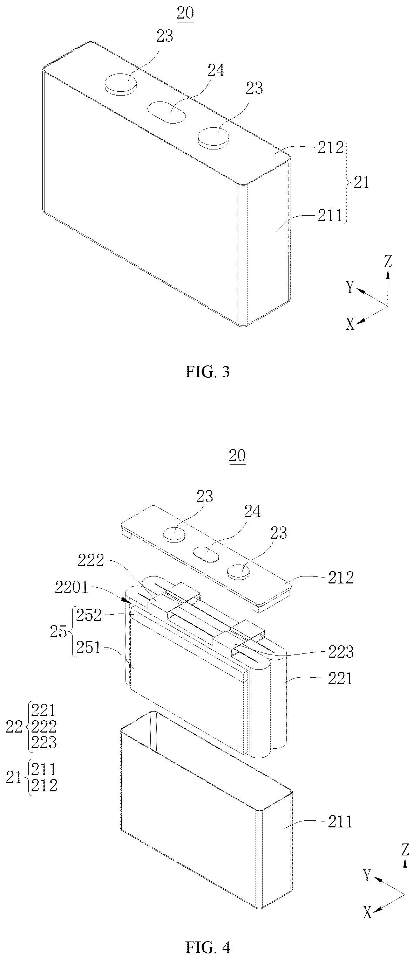

Referring to FIG. 3, FIG. 3 is a schematic exploded structural diagram of a battery cell 20 according to some embodiments of this application. The battery cell 20 is the smallest unit constituting a battery. As shown in FIG. 3, the battery cell 20 includes an outer shell 21, an electrode assembly 22, and other functional components. The outer shell 21 includes a housing 211 and an end cover 212, where the housing 211 covers an opening of the end cover 212, and the housing 211 and the end cover 212 together enclose a mounting cavity 2111. The mounting cavity 2111 provides an mounting space for the electrode assembly 22 and other components.

The end cover 212 is a component that covers the opening of the housing 211 to isolate the internal environment of the battery cell 20 from the external environment. Without limitation, a shape of the end cover 212 may be adapted to a shape of the housing 211 to fit the housing 211. Optionally, the end cover 212 may be made of a material with a certain hardness and strength (for example, aluminum alloy), so that the end cover 212 is less likely to deform during extrusion or collision, enabling the battery cell 20 to have higher structural strength and improved safety performance. Functional components such as an electrode terminal 23 may be provided on the end cover 212. The electrode terminal 23 may be electrically connected to the electrode assembly 22 for outputting or inputting electrical energy of the battery cell 20.

In some embodiments, a pressure relief mechanism 24 may also be provided on the end cover 212 to release internal pressure when internal pressure or temperature of the battery cell 20 reaches a threshold. The end cover 212 may be made from different materials, such as copper, iron, aluminum, stainless steel, aluminum alloy, or plastic.

In some embodiments, an insulating sheet may also be provided on an inner side of the end cover 212. The insulating sheet may be configured to isolate electrical connection components within the housing 211 from the end cover 212, reducing the risk of short circuits. For example, the insulating sheet may be made of plastic or rubber.

The housing 211 is a component that cooperates with the end cover 212 to form the internal environment of the battery cell 20, where the internal environment can accommodate the electrode assembly 22, an electrolyte, and other components. The housing 211 and the end cover 212 may be independent components. The housing 211 is provided with an opening, and the end cover 212 covers the opening to form the internal environment of the battery cell 20. Without limitation, the end cover 212 and the housing 211 may alternatively be integrated. Specifically, the end cover 212 and the housing 211 may form a common connection surface before other components are installed in the housing, and when the interior of the housing 211 needs to be sealed, the end cover 212 covers the housing 211. The housing 211 may be of multiple shapes and sizes, such as a cuboid, a cylinder, or a hexagonal prism. Specifically, the shape of the housing 211 may be determined based on the specific shape and size of the electrode assembly 22. The housing 211 may be made of multiple materials, such as copper, iron, aluminum, stainless steel, aluminum alloy, or plastic, which is not specially limited in the embodiments of this application.

The electrode assembly 22 is a component in the battery cell 20 where electrochemical reactions take place. The housing 211 may contain one or more electrode assemblies 22. The electrode assembly 22 includes a positive electrode, a negative electrode, and a separator. During a charge-discharge process of the battery cell, active ions (for example, lithium ions) intercalate and deintercalate back and forth between a positive electrode and a negative electrode. The separator is disposed between the positive electrode and the negative electrode to prevent short circuits between the positive and negative electrodes while allowing active ions to pass through.

In some embodiments, the positive electrode may be a positive electrode plate, and the positive electrode plate may include a positive electrode current collector and a positive electrode active material provided on at least one surface of the positive electrode current collector.

In some embodiments, the negative electrode may be a negative electrode plate, and the negative electrode plate may include a negative electrode current collector and a negative electrode active material provided on at least one surface of the negative electrode current collector.

In some embodiments, the separator is a separation membrane. This application imposes no particular restrictions on a type of the separation membrane, and any well-known porous separation membrane with good chemical stability and mechanical stability may be used.

In some embodiments, the electrode assembly 22 is a wound structure. The positive electrode plate and the negative electrode plate are wound into the wound structure.

In some embodiments, the electrode assembly 22 is a stacked structure.

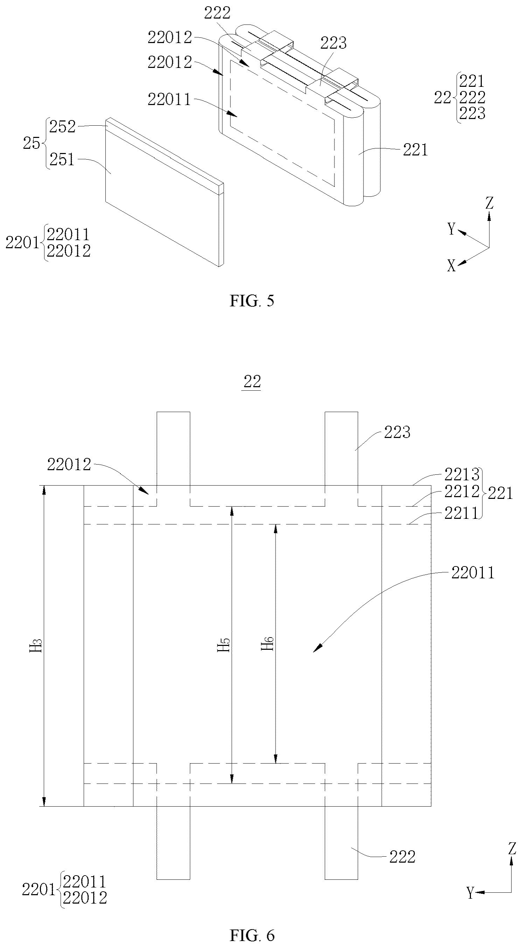

As shown in FIGs. 4 and 5, in one embodiment of this application, a battery cell 20 is provided. The battery cell 20 includes an outer shell 21, an electrode assembly 22, and a buffer member 25. The outer shell 21 has a mounting cavity 2111; the electrode assembly 22 is located in the mounting cavity 2111, the electrode assembly 22 having side surface 2201 distributed in a thickness direction of the electrode assembly 22; the buffer member 25 is located in the mounting cavity 2111; and the buffer member 25 includes a first buffer portion 251 and a second buffer portion 252, the first buffer portion 251 having at least one edge portion connected to the second buffer portion 252, the first buffer portion 251 at least partially covering a central region 22011 of the side surface 2201, and the second buffer portion 252 covering an edge region 22012 of the side surface 2201; where under the same pressure, a compression amount of the first buffer portion 251 is greater than a compression amount of the second buffer portion 252.

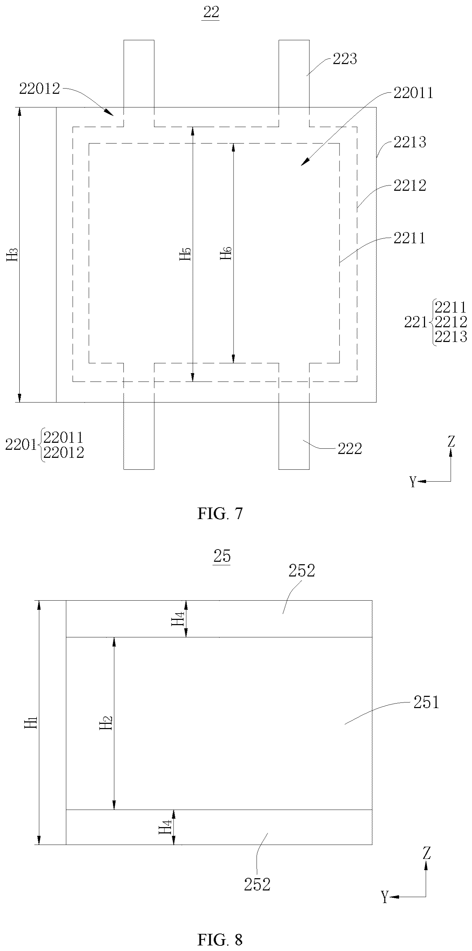

The electrode assembly 22 has a side surface 2201 distributed in its thickness direction, where the thickness direction refers to a thickness direction (X direction) of the electrode assembly 22. As shown in FIGs. 4, 5, and 6, the electrode assembly 22 is formed by winding a positive electrode plate 2211 and a negative electrode plate 2212. A middle portion of the electrode assembly 22 is flat, and two side portions are bent. The positive electrode plate 2211 and the negative electrode plate 2212 at the middle portion of the electrode assembly 22 are stacked in a thickness direction of the electrode plates. The thickness direction of the electrode assembly 22 may refer to a thickness direction or a stacking direction of the electrode plates at the middle portion of the electrode assembly 22. The side surface 2201 distributed in the thickness direction (X direction) of the electrode assembly 22 may refer to either of the two side surface 2201 of the electrode assembly 22 spaced apart in the thickness direction; and the side surface 2201 may refer to a surface of the electrode assembly 22 perpendicular to the thickness direction (X direction). For example, as shown in FIG. 7, the electrode assembly 22 is formed by stacking the positive electrode plate 2211 and the negative electrode plate 2212, where the thickness direction (X direction) of the electrode assembly 22 may refer to a thickness direction or stacking direction of the electrode plates; and the side surface 2201 distributed in the thickness direction of the electrode assembly 22 may refer to a surface of the electrode assembly 22 perpendicular to the thickness direction.

During a charging process of the battery cell 20, the negative electrode plate 2212 thickens in the thickness direction, causing the side surface 2201 to expand outward, where an expansion force in the central region 22011 of the side surface 2201 is greater than an expansion force in the edge region 22012 of the side surface 2201. The central region 22011 of the side surface 2201 may refer to a middle portion of the side surface 2201, and the edge region 22012 of the side surface 2201 may refer to a region located at the side of the central region 22011. For example, as shown in FIG. 5, the central region 22011 may refer to the rectangular region indicated by the dashed lines in FIG. 5, and the edge region 22012 may refer to the region located on one side of the rectangular region. The dashed lines are auxiliary lines for conveniently indicating the central region 22011 and the edge region 22012 and do not represent actual lines on the electrode assembly. The shape of the central region 22011 may be a regular shape, such as a circle, square, or triangle, or it may be another irregular shape.

The buffer member 25 may refer to a component with elasticity. The buffer member 25 can undergo elastic deformation when compressed and can automatically recover after the compression force disappears. The buffer member 25 is made of a corrosion-resistant material to be suitable for the electrolyte environment inside the battery cell 20. The material of the buffer member 25 may be at least one of polyethylene, polypropylene, polyethylene terephthalate, aerogel, foam material, silicone rubber, or the like. These materials have strong pressure resistance, good electrolyte tolerance, and low cost, facilitating manufacturing and use.

The buffer member 25 includes a first buffer portion 251 and a second buffer portion 252. It can be understood that the buffer member 25 may be divided into the first buffer portion 251 and the second buffer portion 252, where the first buffer portion 251 can cover the central region 22011. Then, when the side surface 2201 expands, the central region 22011 compresses the first buffer portion 251 to cause elastic deformation. The elastic deformation of the first buffer portion 251 absorbs the expansion force in the central region 22011, thereby reducing the expansion force in the central region 22011. The second buffer portion 252 can cover the edge region 22012. When the side surface 2201 expands, the edge region 22012 compresses the second buffer portion 252 to cause elastic deformation. The elastic deformation of the second buffer portion 252 absorbs the expansion force in the edge region 22012, thereby reducing the expansion force in the edge region 22012. This reduces the expansion force on the side surface 2201, reducing the risk of wrinkling in the electrode assembly 22. The first buffer portion 251 at least partially covering the central region 22011 can be understood as the first buffer portion 251 covering only the central region 22011, or, in addition to covering the central region 22011, also covering other edge regions 22012 not covered by the second buffer portion 252. The first buffer portion 251 covering the central region 22011 may mean that the first buffer portion 251 is in contact with the central region 22011; and the second buffer portion 252 covering the edge region 22012 may mean that the second buffer portion 252 is in contact with the edge region 22012.

The compression amount of the first buffer portion 251 may refer to a dimensional variation of the first buffer portion 251 before and after being compressed. When the central region 22011 expands, it typically compresses the first buffer portion 251 along the thickness direction (X direction) of the first buffer portion 251. The compression amount of the first buffer portion 251 can be obtained by measuring a difference in thickness of the first buffer portion 251 before and after compression. Similarly, the compression amount of the second buffer portion 252 may refer to a dimensional variation of the second buffer portion 252 before and after being compressed. When the edge region 22012 expands, it typically compresses the second buffer portion 252 along the thickness direction of the second buffer portion 252. The compression amount of the second buffer portion 252 can be obtained by measuring a difference in thickness of the second buffer portion 252 before and after compression.

In actual use, the compression amount of a component can be obtained as follows:

1. taking two sets of samples with dimensions of 46 mm (width) * 50 mm (length) for testing;
2. ensuring that the sample chamber of an in-situ expansion analyzer contains only spacers and no samples, closing the protective door, starting the MISS software, and selecting the channel for the experiment in the channel information: pressing the buttons such as back to origin, reset pressure, and reset thickness reset, respectively;
3. placing the sample in the sample chamber of the in-situ expansion analyzer, with the center of the sample and the center of the spacer aligned with the centers of two laser beams, closing the protective door, and securing the explosion-proof latch; then inputting the length and width values of the sample in the MISS system, and pressing start to begin testing; and
4. conducting a compression test at 0.5 mm/miN, and recording the thickness changes in real time until the pressure reaches 1 MPa, to obtain the compression amount.

Under the same pressure, the compression amount of the first buffer portion 251 is greater than the compression amount of the second buffer portion 252. It can be understood that when the first buffer portion 251 and the second buffer portion 252 are subjected to the same pressure, the deformation amount of the first buffer portion 251 before and after compression is greater than the compression amount of the second buffer portion 252 before and after compression, making the first buffer portion 251 easier to compress compared to the second buffer portion 252, and allowing the first buffer portion 251 and the second buffer portion 252 to more effectively reduce the expansion force.

In the battery cell 20 of embodiments of this application, under the same pressure, the compression amount of the first buffer portion 251 is greater than the compression amount of the second buffer portion 252, making the first buffer portion 251 more easily deformed under compression compared to the second buffer portion 252. The edge region 22012 with a smaller expansion force compresses the second buffer portion 252, while the central region 22011 with a larger expansion force compresses the first buffer portion 251, resulting in a more significant reduction in the larger expansion force on the central region 22011 compared to the smaller expansion force on the edge region 22012. This reduces the difference between the expansion force in the central region 22011 of the side surface 2201 and the expansion force in the edge region 22012 of the side surface 2201, mitigates uneven expansion force distribution between the central region 22011 and the edge region 22012, and reduces the risk of lithium precipitation in the electrode assembly 22, thereby improving the cycling performance and service life of the battery cell 20.

In another embodiment of this application, as shown in FIGs. 4 and 5, under a pressure of 0.5 MPa to 1 MPa, the compression rate of the first buffer portion 251 is greater than or equal to 40%.

The compression rate may refer to a ratio of a thickness variation of a component before and after compression to its thickness before compression. The compression rate is q, the thickness of the component before compression is $H_0$, and the thickness after compression is $H_k$, where

$$q = \frac{(H_0 - H_k)}{H_0} \times 100\%.$$

In the battery cell 20 of embodiments of this application, the compression rate of the first buffer portion 251 under a pressure of 0.5 MPa to 1 MPa is greater than or equal to 40%, so that the thickness of the first buffer portion 251 under an expansion pressure of 0.5 MPa to 1 MPa is reduced by at least 40%, that is, the thickness is reduced at least by approximately half. This can provide a large expansion space for the central region 22011, effectively reduce the expansion force in the central region 22011, and reduce the risk of lithium precipitation.

The pressure applied to the first buffer portion 251 may be, but is not limited to, 0.5 MPa, 0.6 MPa, 0.7 MPa, 0.8 MPa, 0.9 MPa, or 1 MPa.

Under a pressure of 0.5 MPa to 1 MPa, the compression rate of the first buffer portion 251 may be, but is not limited to, 40%, 45%, 50%, 55%, 60%, 65%, 70%, 75%, 80%, 85%, 90%, 95%, or 99%.

In another embodiment of this application, as shown in FIGs. 4 and 5, under a pressure of 0.5 MPa, the compression rate of the first buffer portion 251 is greater than or equal to 40%; and/or under a pressure of 0.8 MPa, the compression rate of the first buffer portion 251 is greater than or equal to 60%; and/or under a pressure of 1 MPa, the compression rate of the first buffer portion 251 is greater than or equal to 85%.

The compression rate of the first buffer portion 251 satisfies at least any one of the above three pressure conditions. As the electrode assembly 22 expands with use, the pressure in the central region 22011 increases, and the expansion pressure on the first buffer portion 251 also increases, resulting in an increasing compression deformation of the first buffer portion 251, thereby allowing the expansion stress in the central region 22011 of the electrode assembly 22 to be fully released. This prevents further deterioration of the expansion force and reduces the risk of wrinkling and lithium precipitation. Certainly, the compression rate of the first buffer portion 251 can be flexibly selected based on the actual expansion force in the central region 22011, thereby more effectively mitigating the expansion force of the electrode assembly 22.

In another embodiment, under a pressure of 0.5 MPa, the compression rate of the first buffer portion 251 is greater than or equal to 40%.

In the battery cell 20 of embodiments of this application, the compression rate of the first buffer portion 251 under a pressure of 0.5 MPa is greater than or equal to 40%, so that the thickness of the first buffer portion 251 under an expansion pressure of 0.5 MPa is reduced by at least 40%, that is, the thickness is reduced at least by approximately half. This can provide a large expansion space for the central region 22011, reduce the expansion force in the central region 22011, and reduce the risk of lithium precipitation.

In another embodiment, under a pressure of 0.8 MPa, the compression rate of the first buffer portion 251 is greater than or equal to 60%.

In the battery cell 20 of the embodiments of this application, the compression rate of the first buffer portion 251 under a pressure of 0.8 MPa is greater than or equal to 60%, so that the thickness of the first buffer portion 251 under a relatively large expansion pressure (that is, 0.8 MPa) is reduced by at least 60%, that is, the thickness is reduced by more than half. This can provide a large expansion space for the central region 22011, effectively reduce the expansion force in the central region 22011, and reduce the risk of lithium precipitation.

In another embodiment, under a pressure of 1 MPa, the compression rate of the first buffer portion 251 is greater than or equal to 85%.

In the battery cell 20 of embodiments of this application, the compression rate of the first buffer portion 251 under a pressure of 1 MPa is greater than or equal to 85%, so that the thickness of the first buffer portion 251 under a larger expansion pressure (that is, 1 MPa) is reduced by at least 85%, that is, the thickness is significantly reduced. This can provide a larger expansion space for the central region 22011, more effectively reduce the expansion force in the central region 22011, and reduce the risk of lithium precipitation.

In another embodiment of this application, under a pressure of 0.5 MPa to 1 MPa, the compression rate of the second buffer portion 252 is greater than or equal to 20%.

In the battery cell 20 of the embodiments of this application, the compression rate of the second buffer portion 252 under a pressure of 0.5 MPa to 1 MPa is greater than or equal to 20%, so that the thickness of the second buffer portion 252 under an expansion pressure of 0.5 MPa to 1 MPa is reduced by at least 20%. This provides an expansion space for the edge region 22012, reduces the expansion force in the edge region 22012, and reduces the risk of lithium precipitation.

The pressure applied to the second buffer portion 252 may be, but is not limited to, 0.5 MPa, 0.6 MPa, 0.7 MPa, 0.8 MPa, 0.9 MPa, or 1 MPa.

Under a pressure of 0.5 MPa to 1 MPa, the compression rate of the second buffer portion 252 may be, but is not limited to, 20%, 25%, 30%, 35%, 40%, 45%, 50%, 55%, 60%, 65%, 70%, 75%, 80%, 85%, 90%, 95%, or 99%.

In another embodiment of this application, the compression rate of the second buffer portion 252 is greater than or equal to 20%; and/or under a pressure of 0.8 MPa, the compression rate of the second buffer portion 252 is greater than or equal to 30%; and/or under a pressure of 1 MPa, the compression rate of the second buffer portion 252 is greater than or equal to 50%.

The compression rate of the second buffer portion 252 satisfies at least any one of the above three pressure conditions. As the electrode assembly 22 expands with use, the pressure in the edge region 22012 increases, and the expansion pressure on the second buffer portion 252 also increases, resulting in an increasing compression deformation of the second buffer portion 252, thereby allowing the expansion stress in the edge region 22012 of the electrode assembly 22 to be fully released. This prevents further deterioration of the expansion force and reduces the risk of wrinkling and lithium precipitation. Certainly, the compression rate of the second buffer portion 252 can be flexibly selected based on the actual expansion force in the edge region 22012, thereby more effectively mitigating the expansion force of the electrode assembly 22.

In another embodiment, under a pressure of 0.5 MPa, the compression rate of the second buffer portion 252 is greater than or equal to 20%.

In the battery cell 20 of the embodiments of this application, the compression rate of the second buffer portion 252 under a pressure of 0.5 MPa is greater than or equal to 20%, so that the thickness of the second buffer portion 252 under an expansion pressure of 0.5 MPa is reduced by at least 20%. This provides an expansion space for the edge region 22012, reduces the expansion force in the edge region 22012, and reduces the risk of lithium precipitation.

In another embodiment, under a pressure of 0.8 MPa, the compression rate of the second buffer portion 252 is greater than or equal to 30%.

In the battery cell 20 of the embodiments of this application, the compression rate of the second buffer portion 252 under a pressure of 0.8 MPa is greater than or equal to 20%, so that the thickness of the second buffer portion 252 under a relatively large expansion pressure (that is, 0.8 MPa) is reduced by at least 30%. This provides a large expansion space for the edge region 22012, effectively reduces the expansion force in the edge region 22012, and reduces the risk of lithium precipitation.

In another embodiment, under a pressure of 1 MPa, the compression rate of the second buffer portion 252 is greater than or equal to 50%.

In the battery cell 20 of the embodiments of this application, the compression rate of the second buffer portion 252 under a pressure of 1 MPa is greater than or equal to 20%, so that the thickness of the second buffer portion 252 under an even larger expansion pressure (that is, 1 MPa) is reduced by at least 50%, that is, the thickness is reduced by at least half. This can provide an even larger expansion space for the edge region 22012, more effectively reduce the expansion force in the edge region 22012, and reduce the risk of lithium precipitation.

In another embodiment of this application, as shown in FIGs. 4 and 5, for the battery cell 20, a porosity of the first buffer portion 251 ranges from 40% to 95%.

Porosity (P) refers to a percentage of a pore volume within a component relative to its total volume. The expression for the porosity (P) is:

$$P = \frac{(V_0 - V)}{V_0} \times 100\%$$ ; where P is the porosity of the component, $V_0$ is the volume of the component in its natural state or apparent volume, and V is the absolute dense volume of the component. The greater the porosity of the first buffer portion 251, the larger the pore volume within the first buffer portion 251, and the greater the compression amount of the first buffer portion 251 after compression. Generally, the greater the porosity, the larger the pore volume within the component, and the easier it is for the component to deform under compression. The porosity of a component can be obtained by referring to the testing method described in T/CSTM 00553-2022.

In the battery cell 20 of the embodiments of this application, on one hand, the first buffer portion 251 has pores, and the pores allow the electrolyte to pass through the first buffer portion 251 to reach the electrode assembly 22, replenishing the electrolyte for the electrode assembly 22, thereby improving the electrolyte circulation within the battery cell 20, and enhancing the performance of the battery cell 20. On the other hand, the porosity of the first buffer portion 251 is set within a range of 40% to 95%, so that the pore volume within the first buffer portion 251 accounts for at least 40% of the total volume of the first buffer portion 251, that is, the pore volume within the first buffer portion 251 is at least nearly half of the total volume of the first buffer portion 251. This enables the first buffer portion 251 to have good compression deformation capability, effectively reduces the expansion force in the central region 22011, and reduces the risk of lithium precipitation. The pore volume within the first buffer portion 251 is at most nearly 95% of the total volume of the first buffer portion 251, providing the first buffer portion 251 with certain structural strength and allowing its stable installation within the battery cell 20.

In one embodiment, the porosity of the first buffer portion 251 may be, but is not limited to, 40%, 45%, 50%, 55%, 60%, 65%, 70%, 75%, 80%, 85%, 90%, or 95%.

In another embodiment of this application, as shown in FIGs. 4 and 5, for the battery cell 20 provided, a porosity of the first buffer portion 251 ranges from 75% to 90%.

In the battery cell 20 of the embodiments of this application, the porosity of the first buffer portion 251 is set within a range of 75% to 90%, so that the pore volume within the first buffer portion 251 accounts for at least 75% of the total volume of the first buffer portion 251, that is, the pore volume within the first buffer portion 251 accounts for at least 3/4 of the total volume of the first buffer portion 251. This enables the first buffer portion 251 to have better compression deformation capability, more effectively reduces the expansion force in the central region 22011, and reduces the risk of lithium precipitation. The pore volume within the first buffer portion 251 is at most nearly 90% of the total volume of the first buffer portion 251, providing the first buffer portion 251 with good structural strength and allowing its stable installation within the battery cell 20.

In one embodiment, the porosity of the first buffer portion 251 may be, but is not limited to, 75%, 76%, 77%, 78%, 79%, 80%, 81%, 82%, 83%, 84%, 85%, 86%, 87%, 88%, 89%, or 90%.

In another embodiment of this application, as shown in FIGs. 4 and 5, for the battery cell 20 provided, a porosity of the second buffer portion 252 ranges from 5% to 60%.

In the battery cell 20 of the embodiments of this application, on one hand, the second buffer portion 252 has pores, and the pores allow the electrolyte to pass through the second buffer portion 252 to reach the electrode assembly 22, replenishing the electrolyte for the electrode assembly 22, thereby improving the electrolyte circulation within the battery cell 20, and enhancing the performance of the battery cell 20. On the other hand, the porosity of the second buffer portion 252 is set within the range of 5% to 60%, so that the pore volume within the second buffer portion 252 accounts for at least 5% of the total volume of the second buffer portion 252. In this way, the pore volume within the second buffer portion 252 can be designed to account for a small portion of the total volume of the second buffer portion 252, providing the second buffer portion 252 with a weak compression deformation capability. This can reduce the expansion force in the edge region 22012, though to a limited extend, thereby helping to reduce the difference in expansion forces between the central region 22011 and the edge region 22012. The pore volume within the second buffer portion 252 is at most nearly 60% of the total volume of the second buffer portion 252, providing the second buffer portion 252 with certain compression deformation capability, reducing the expansion force in the edge region 22012, and reducing the risk of lithium precipitation.

In one embodiment, the porosity of the second buffer portion 252 may be, but is not limited to, 5%, 10%, 15%, 20%, 25%, 30%, 35%, 40%, 45%, 50%, 55%, or 60%.

In another embodiment of this application, as shown in FIGs. 4 and 5, for the battery cell 20 provided, a porosity of the second buffer portion 252 ranges from 10% to 40%.

In the battery cell 20 of the embodiments of this application, the porosity of the second buffer portion 252 is set within the range of 10% to 40%, so that the pore volume within the second buffer portion 252 accounts for at least 10% of the total volume of the second buffer portion 252, that is, the pore volume within the second buffer portion 252 can be designed to account for onetenth of the total volume of the second buffer portion 252. In this way, the second buffer portion 252 has certain compression deformation capability, reducing the expansion force in the edge region 22012 to some extent. The pore volume within the second buffer portion 252 accounts for at most 40% of the total volume of the second buffer portion 252, enabling the second buffer portion 252 to have good compression deformation capability. This can reduce the expansion force in the edge region 22012 to some extent, facilitating the balance of uneven expansion force distribution between the central region 22011 and the edge region 22012, and reducing the risk of lithium precipitation.

In one embodiment, the porosity of the second buffer portion 252 may be, but is not limited to, 10%, 12%, 14%, 16%, 18%, 20%, 22%, 24%, 26%, 28%, 30%, 32%, 34%, 36%, 38%, or 40%.

In another embodiment of this application, as shown in FIGs. 4 and 5, for the battery cell 20 provided, an elastic modulus of the first buffer portion 251 less than an elastic modulus of the second buffer portion 252.

The elastic modulus refers to a stress in an uniaxial stress state divided by a strain in that direction, which is a physical quantity describing elasticity of a component. The elastic modulus can be obtained by referring to the testing method described in GB/T 1041-2008.

In the battery cell 20 of the embodiments of this application, the elastic modulus of the first buffer portion 251 is less than the elastic modulus of the second buffer portion 252, making the deformation difficulty of the first buffer portion 251 less than the deformation difficulty of the second buffer portion 252. The edge region 22012 with a smaller expansion force compresses the second buffer portion 252 with a greater deformation difficulty, while the central region 22011 with a larger expansion force compresses the first buffer portion 251 with a greater deformation difficulty, resulting in a more significant reduction in the larger expansion force on the central region 22011 compared to the smaller expansion force on the edge region 22012. This reduces the difference between the expansion force in the central region 22011 of the side surface 2201 and the expansion force in the edge region 22012 of the side surface 2201, mitigates uneven expansion force distribution between the central region 22011 and the edge region 22012, and reduces the risk of lithium precipitation in the electrode assembly 22, thereby improving the cycling performance and service life of the battery cell 20.

In another embodiment of this application, as shown in FIGs. 4 and 5, for the battery cell 20 provided, a material of the first buffer portion 251 is the same as a material of the second buffer portion 252.

In the battery cell 20 of the embodiments of this application, the first buffer portion 251 and the second buffer portion 252 are made of the same material, facilitating the manufacturing and processing of the buffer member 25. It should be noted that when the first buffer portion 251 and the second buffer portion 252 are made of the same material, the structure of the first buffer portion 251 differs from the structure of the second buffer portion 252, for example, in terms of thickness, porosity, or the like, so that under the same pressure, the compression amount of the first buffer portion 251 differs from the compression amount of the second buffer portion 252.

In another embodiment of this application, as shown in FIGs. 4 and 5, for the battery cell 20 provided, a material of the first buffer portion 251 is different from a material of the second buffer portion 252.

In the battery cell 20 of the embodiments of this application, the first buffer portion 251 and the second buffer portion 252 are made of different materials, so that different materials can be selected based on the different expansion forces in the central region 22011 and the edge region 22012 for manufacturing the first buffer portion 251 and the second buffer portion 252, thereby more effectively mitigating uneven expansion force distribution on the side surface 2201.

In another embodiment of this application, as shown in FIGs. 4 and 5, for the battery cell 20 provided, an area of the first buffer portion 251 is $S_1$, a sum of areas of all second buffer portions 252 is $S_2$, and $0.3 \leq S_1/(S_1+S_2) \leq 0.9$.

The area of the first buffer portion 251 may refer to a projected area of the first buffer portion 251 along the thickness direction (X direction). For example, as shown in FIG. 5, the buffer member 25 is a flat buffer pad, and the area of the first buffer portion 251 may alternatively refer to an area of a surface of the first buffer portion 251 facing the side surface 2201, where the surface is in contact with the central region 22011 of the side surface 2201.

The area of the second buffer portion 252 may refer to a projected area of the second buffer portion 252 along the thickness direction (X direction). For example, as shown in FIG. 5, the buffer member 25 is a flat buffer pad, and the area of the second buffer portion 252 may alternatively refer to an area of a surface of the second buffer portion 252 facing the side surface 2201, where the surface is in contact with the edge region 22012 of the side surface 2201.

$(S_1+S_2)$ may refer to a sum of the area of the first buffer portion 251 and the areas of all second buffer portions 252, that is, the area of the buffer member 25. The area of the buffer member 25 may refer to a projected area of the buffer member 25 along the thickness direction (X direction). For example, as shown in FIG. 5, the buffer member 25 is a flat buffer pad, and the area of the buffer member 25 may refer to an area of a surface of the buffer member 25 facing the side surface 2201, where the surface is in contact with the side surface 2201. $S_1/(S_1+S_2)$ may refer to a ratio of the area of the first buffer portion 251 to the area of the buffer member 25, that is, an area ratio of a second region to a first region, where the buffer member 25 is in contact with the first region of the side surface 2201, and the first buffer portion 251 is in contact with the second region of the side surface 2201.

In the battery cell 20 of the embodiments of this application, the setting of $0.3 \leq S_1/(S_1+S_2) \leq 0.9$ makes the area of the first buffer portion 251 account for at least 0.3 of the area of the buffer member 25. This ensures that the first buffer portion 251 has some area covering the central region 22011, effectively mitigating the expansion force in the central region 22011. Additionally, the area of the first buffer portion 251 accounts for at most 0.9 of the area of the buffer member 25, preventing the first buffer portion 251 from being too large. This ensures that the second buffer portion 252 has some area covering the edge region 22012, thereby mitigating the expansion force in the edge region 22012.

In one embodiment, a value of $S_1/(S_1+S_2)$ may be, but is not limited to, 0.3, 0.35, 0.4, 0.45, 0.5, 0.55, 0.6, 0.65, 0.7, 0.75, 0.8, 0.85, or 0.9.

In another embodiment of this application, as shown in FIGs. 4 and 5, for the battery cell 20 provided, $0.5 \leq S_1/(S_1+S_2) \leq 0.85$.

In the battery cell 20 of the embodiments of this application, the setting of $0.5 \leq S_1/(S_1+S_2) \leq 0.85$ makes the area of the first buffer portion 251 account for at least 0.5 of the area of the buffer member 25. This ensures that the first buffer portion 251 has a large area covering the central region 22011, more effectively mitigating the expansion force in the central region 22011. Additionally, the area of the first buffer portion 251 accounts for at most 0.85 of the area of the buffer member 25. This ensures that the second buffer portion 252 has a large area covering the edge region 22012, more effectively mitigating the expansion force in the edge region 22012.

In one embodiment, a value of $S_1/(S_1+S_2)$ may be, but is not limited to, 0.5, 0.52, 0.54, 0.56, 0.58, 0.6, 0.62, 0.64, 0.66, 0.68, 0.7, 0.72, 0.74, 0.76, 0.78, 0.8, 0.82, 0.84, or 0.85.

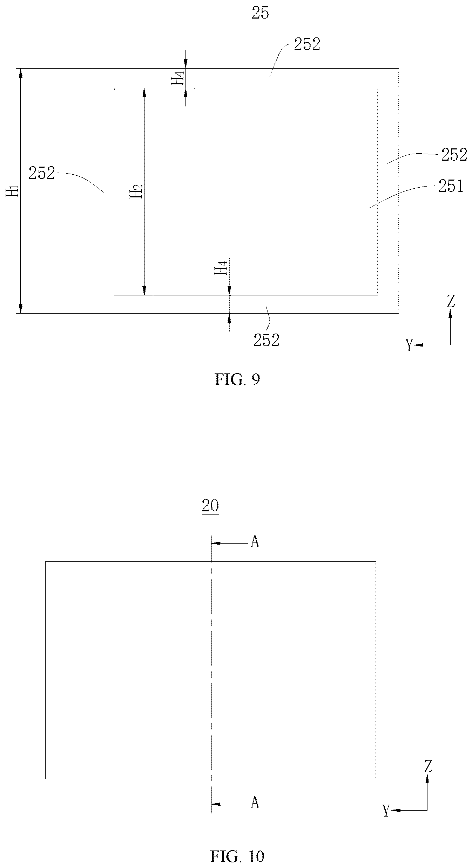

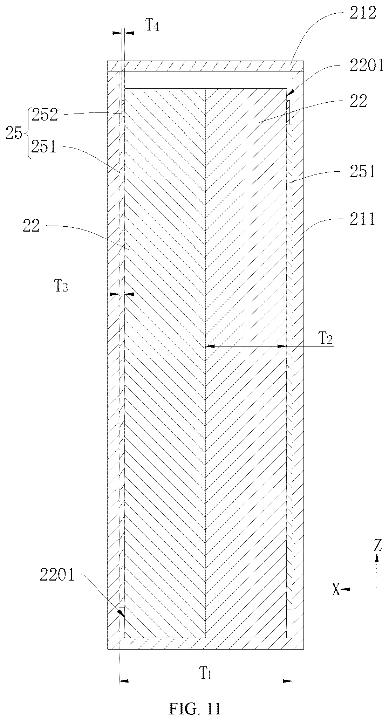

In another embodiment of this application, as shown in FIGs. 10 and 11, for the battery cell 20 provided, a thickness $T_3$ of the first buffer portion 251 in an uncompressed state is greater than a thickness $T_4$ of the second buffer portion 252 in an uncompressed state.

The uncompressed state of the first buffer portion 251 refers to a state where the first buffer portion 251 is not subjected to pressure compression, for example, a state of the first buffer portion 251 when the battery cell 20 is not in use.

The uncompressed state of the second buffer portion 252 refers to a state where the second buffer portion 252 is not subjected to pressure compression, for example, a state of the second buffer portion 252 when the battery cell 20 is not in use.

In the battery cell 20 of the embodiments of this application, the thickness $T_3$ of the first buffer portion 251 in an uncompressed state is greater than the thickness $T_4$ of the second buffer portion 252 in an uncompressed state. After compression of the first buffer portion 251 and the second buffer portion 252, the first buffer portion 251 has a large compressible space, providing a larger expansion space for the central region 22011, thereby more effectively mitigating uneven expansion force distribution on the side surface 2201.

In another embodiment of this application, as shown in FIGs. 10 and 11, for the battery cell 20 provided, a thickness of the mounting cavity 2111 is $T_1$, a thickness of the electrode assembly 22 is $T_2$, a quantity of electrode assemblies 22 is $N_1$, a quantity of buffer members 25 is $N_2$, and a thickness of the first buffer portion 251 in an uncompressed state is $T_3$, where $0.85 \leq (N_1*T_2 + N_2*T_3)/T_1 \leq 0.95$.

$N_1*T_2+N_2*T_3$ may refer to a sum of the thicknesses of all electrode assemblies 22 and the thicknesses of all first buffer portions 251. Typically, the thickness of the first buffer portion 251 is greater than the thickness of the second buffer portion 252. $N_1 *T_2+N_2*T_3$ may also refer to a total thickness after all electrode assemblies 22 and all buffer members 25 are assembled.

$(N_1*T_2+N_2*T_3)/T_1$ may refer to a proportion of all electrode assemblies 22 and all buffer members 25 in the thickness direction (X direction) of the mounting cavity 2111, where $(N_1*T_2+N_2*T_3)/T_1 \leq 0.95$. It can be understood that the total thickness of all electrode assemblies 22 and all buffer members 25 is slightly less than the thickness of the mounting cavity 2111, ensuring that the mounting cavity 2111 has sufficient space to accommodate the electrode assemblies 22 and the buffer members 25. This also allows the electrode assemblies 22 and the buffer members 25 to be smoothly installed in the mounting cavity 2111. Additionally, $(N_1*T_2+N_2*T_3)/T_1 \geq 0.85$ ensures that after the electrode assemblies 22 and the buffer members 25 are installed in the mounting cavity 2111, they can occupy most of the space in the mounting cavity 2111 in the thickness direction (X direction) of the mounting cavity 2111, allowing the electrode assemblies 22 and the buffer members 25 to be stably installed in the mounting cavity 2111.

In the battery cell 20 of the embodiments of this application, the setting of $0.85 \leq (N_1*T_2+N_2*T_3)/T_1 \leq 0.95$ allows the electrode assemblies 22 and the buffer members 25 to be conveniently installed in the mounting cavity 2111, and also allows the electrode assemblies 22 and the buffer members 25 to be stably installed in the mounting cavity 2111.

In one embodiment, a value of $(N_1*T_2+N_2*T_3)/T_1$ may be, but is not limited to, 0.85, 0.86, 0.87, 0.88, 0.89, 0.9, 0.91, 0.92, 0.93, 0.94, or 0.95.

In another embodiment of this application, as shown in FIGs. 8 and 9, for the battery cell 20 provided, a width of the buffer member 25 is $H_1$, a width of the first buffer portion 251 is $H_2$, and $3.5$ mm $\leq H_1 - H_2 \leq 5.5$ mm.

A width direction of the buffer member 25, for example, may refer to a height direction (Z direction) of the electrode assembly 22, and the width $H_1$ of the buffer member 25 refers to a dimension of the buffer member 25 in the height direction of the electrode assembly 22. A width $H_2$ direction of the first buffer portion 251, for example, may refer to the height direction (Z direction) of the electrode assembly 22, and the width $H_2$ of the first buffer portion 251 refers to a dimension of the first buffer portion 251 in the height direction of the electrode assembly 22.

$H_1 - H_2$ may refer to a sum of widths $H_4$ of all second buffer portions 252 in the height direction (Z direction) of the electrode assembly 22. $H_1 - H_2 \geq 3.5$ mm ensures that the second buffer portion 252 covers a large area of the edge region 22012, thereby more effectively mitigating uneven expansion force distribution on the side surface 2201. $H_1 - H_2 \leq 5.5$ mm ensures that the width $H_2$ of the first buffer portion 251 is not too small, effectively buffering the expansion force in the central region 22011.

In the battery cell 20 of the embodiments of this application, the setting of $3.5$ mm $\leq H_1 - H_2 \leq 5.5$ mm can more effectively mitigate uneven expansion force distribution on the side surface 2201.

In one embodiment, a value of $H_1 - H_2$ may be, but is not limited to, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, 5 mm, 5.1 mm, 5.2 mm, 5.3 mm, 5.4 mm, or 5.5 mm.

In another embodiment of this application, as shown in FIGs. 5, 8, and 9, for the battery cell 20 provided, any one edge portion of the first buffer portion 251 is connected to the second buffer portion 252; or two adjacent edge portions of the first buffer portion 251 are each connected to the second buffer portion 252; or two opposite edge portions of the first buffer portion 251 are each connected to the second buffer portion 252; or any three edge portions of the first buffer portion 251 are each connected to the second buffer portion 252; or four edge portions of the first buffer portion 251 are each connected to the second buffer portion 252.

Satisfying that one edge portion of the first buffer portion 251 is connected to the second buffer portion 252 allows the central region 22011 and one edge region 22012 of the side surface 2201 to respectively compress the corresponding first buffer portion 251 and second buffer portion 252, mitigating uneven expansion force distribution on the side surface 2201 and reducing the risk of lithium precipitation. For example, the upper edge portion of the first buffer portion 251 is connected to the second buffer portion, or both the upper and lower edge portions of the first buffer portion 251 are connected to the second buffer portion 252, or four edge portions of the first buffer portion 251 are all connected to the second buffer portion 252.

In the battery cell 20 of the embodiments of this application, the second buffer portion 252 can be flexibly distributed relative to the first buffer portion 251, supporting adaptation to different types of battery cells 20 to better mitigate uneven expansion force distribution and reduce the risk of lithium precipitation.

In another embodiment of this application, as shown in FIGs. 4 and 5, for the battery cell 20 provided, an electrode assembly 22 includes a main body portion 221, a positive electrode tab 222, and a negative electrode tab 223, the positive electrode tab 222 and the negative electrode tab 223 being connected to a same end of the main body portion 221; and an edge portion of the first buffer portion 251 near the positive electrode tab 222 is connected to the second buffer portion 252.

The main body portion 221 may refer to a portion of the positive electrode plate 2211 and the negative electrode plate 2212 covered with an active substance, the positive electrode tab 222 may refer to a portion extending from the edge of the positive electrode plate 2211 and used for connection to the electrode terminal 23, and the negative electrode tab 223 may refer to a portion extending from the edge of the negative electrode plate 2212 and used for connection to the electrode terminal 23. Either of the two surfaces of the main body portion 221 arranged opposite each other in the thickness direction (X direction) is the side surface 2201, the positive electrode tab 222 and the negative electrode tab 223 being connected to a same end of the main body portion 221, and the positive electrode tab 222 and the negative electrode tab 223 being located on a same side of the side surface 2201. Typically, the expansion force in the edge region 22012 of the side surface 2201 near the tabs is significantly less than the expansion force in the central region 22011.

An edge portion of the first buffer portion 251 near the positive electrode tab 222 is connected to the second buffer portion 252, the second buffer portion 252 covering the edge region 22012 of the side surface 2201 near the positive electrode tab 222, and the first buffer portion 251 covering the central region 22011. When the side surface 2201 expands, the edge region 22012 near the positive electrode tab 222 compresses the second buffer portion 252, and the central region 22011 compresses the first buffer portion 251, thereby mitigating the difference in expansion forces between the edge region 22012 near the positive electrode tab 222 and the central region 22011.

In the battery cell 20 of the embodiments of this application, the difference in expansion forces between the edge region 22012 near the positive electrode tab 222 and the central region 22011 can be reduced, mitigating uneven expansion force distribution on the side surface 2201 and reducing the risk of lithium precipitation.

In another embodiment of this application, as shown in FIGs. 6, 7, and 8, for the battery cell 20 provided, an electrode assembly 22 includes a main body portion 221, a positive electrode tab 222, and a negative electrode tab 223. The main body portion 221 has a first end and a second end arranged opposite each other, the first end being connected to the positive electrode tab 222, and the second end being connected to the negative electrode tab 223. An edge portion of the first buffer member 25 near the positive electrode tab 222 is connected to the second buffer portion 252, and an edge portion of the first buffer member 25 near the negative electrode tab 223 is connected to the second buffer portion 252.

The main body portion 221 has the first end and the second end arranged opposite each other, with the first end being connected to the positive electrode tab 222 and the second end being connected to the negative electrode tab 223, so that the positive electrode tab 222 and the negative electrode tab 223 are located on opposite sides of the side surface 2201. In this way, the positive electrode tab 222 is separated from the negative electrode tab 223, reducing the risk of short circuits. Additionally, the expansion force in the edge region 22012 of the side surface 2201 near the positive electrode tab 222 and the expansion force in the edge region 22012 near the negative electrode tab 223 are both significantly less than the expansion force in the central region 22011.

An edge portion of the first buffer member 25 near the positive electrode tab 222 is connected to the second buffer portion 252, and an edge portion of the first buffer member 25 near the negative electrode tab 223 is connected to the second buffer portion 252. The second buffer portion 252 connected to the edge portion of the first buffer portion 251 near the positive electrode tab 222 covers the edge region 22012 of the side surface 2201 near the positive electrode tab 222, the second buffer portion 252 connected to the edge portion near the negative electrode tab 223 covers the edge region 22012 of the side surface 2201 near the negative electrode tab 223, and the first buffer portion 251 covers the central region 22011 between these two edge regions 22012. When the side surface 2201 expands, these two edge regions 22012 respectively compress two second buffer portions 252, and the central region 22011 compresses the first buffer portion 251, thereby mitigating the difference in expansion forces between these two edge regions 22012 and the central region 22011.

In the battery cell 20 of the embodiments of this application, the difference in expansion forces between the edge region 22012 near the positive electrode tab 222 and the central region 22011, as well as the difference in expansion forces between the edge region 22012 near the negative electrode tab 223 and the central region 22011, can be reduced, mitigating uneven expansion force distribution on the side surface 2201 and reducing the risk of lithium precipitation.

In another embodiment of this application, as shown in FIG. 9, for the battery cell 20 provided, two opposite edge portions on another side of the first buffer portion 251 are each connected to the second buffer portion 252.

In addition to the opposite edge regions 22012 near the positive electrode tab 222 and the negative electrode tab 223, the expansion force in the other two opposite edge regions 22012 of the side surface 2201 is also less than the expansion force in the central region 22011.

The two opposite edge portions on another side of the first buffer portion 251 are each connected to the second buffer. It can be understood that in addition to the edge portions near the positive electrode tab 222 and the negative electrode tab 223, the other two opposite edge portions of the first buffer portion 251 are each connected to the second buffer portion 252, and these two buffer portions can cover the other two opposite edge regions 22012 of the side surface 2201, excluding the opposite edge regions 22012 near the positive electrode tab 222 and the negative electrode tab 223.

In the battery cell 20 of the embodiments of this application, when the side surface 2201 expands, the four edge regions 22012 of the side surface 2201 respectively compress the four second buffer portions 252, mitigating the difference in expansion forces between the four edge regions 22012 and the central region 22011, more effectively mitigating uneven expansion force distribution on the side surface 2201, and reducing the risk of lithium precipitation.

In another embodiment of this application, as shown in FIG. 9, for the battery cell 20 provided, four second buffer portions 252 are sequentially connected end to end to be annularly arranged around the first buffer portion 251.

The four second buffer portions 252 are sequentially connected end to end to form a ring structure, where the ring structure is disposed around the first buffer portion 251. For example, as shown in FIG. 9, the ring structure may be a quadrilateral frame structure.

In the battery cell 20 of the embodiments of this application, the junctions of adjacent edge regions 22012 can each compress the second buffer portion 252, more comprehensively mitigating the difference in expansion forces between the edge regions 22012 and the central region 22011, more effectively mitigating uneven expansion force distribution on the side surface 2201, and reducing the risk of lithium precipitation.

In another embodiment of this application, as shown in FIGs. 6 to 9, for the battery cell 20 provided, a main body portion 221 includes a positive electrode plate 2211, a negative electrode plate 2212, and a separator 2213, the positive electrode plate 2211, the negative electrode plate 2212, and the separator 2213 being wound or stacked. The positive electrode plate 2211 is connected to the positive electrode tab 222, and the negative electrode plate 2212 is connected to the negative electrode tab 223; and the first buffer portion 251 at least covers a projection region of the positive electrode plate 2211 on the side surface 2201.

As shown in FIG. 6, in an electrode assembly 22 formed by stacking and winding the positive electrode plate 2211, the negative electrode plate 2212, and the separator 2213, typically, a width $H_6$ of the negative electrode plate 2212 is greater than a width $H_5$ of the positive electrode plate 2211, so that the edges of the negative electrode plate 2212 protrude beyond the positive electrode plate 2211, enabling the negative electrode plate 2212 to fully receive active ions (for example, lithium ions) released from the positive electrode plate 2211. Moreover, a width $H_3$ of the separator 2213 is greater than the width $H_6$ of the negative electrode plate 2212, so that the edges of the separator 2213 protrude beyond the negative electrode plate 2212 to insulate and separate the negative electrode plate 2212 from the positive electrode plate 2211. In this way, the edge region 22012 corresponding to the portion of the negative electrode plate 2212 protruding beyond the positive electrode plate 2211 has only the expansion force from the negative electrode plate 2212, while the central region 22011 corresponding to the positive electrode plate 2211 has expansion forces from both the positive electrode plate 2211 and the negative electrode plate 2212, making the expansion force in the edge region 22012 less than the expansion force in the central region 22011. It should be noted that in FIG. 6, the spacing between the upper and lower edges of the negative electrode plate 2212 and the upper and lower edges of the positive electrode plate 2211 is relatively large, and the spacing between the upper and lower edges of the separator 2213 and the upper and lower edges of the negative electrode plate 2212 is also relatively large. This is only for the purpose of clearly showing the structure and does not mean that such large spacing exists in the actual electrode assembly 22. The specific spacing can be set according to actual needs. In a wound electrode assembly 22, the projection region of the positive electrode plate 2211 on the side surface 2201 may refer to a projection region of a flat and straight portion of the positive electrode plate 2211 in the electrode assembly 22 on the side surface 2201. For example, in FIG. 6, the projection region of the positive electrode plate 2211 on the side surface 2201 may refer to a region enclosed by two vertical solid lines near the center of the side surface 2201 and two dashed lines near the center of the side surface 2201.

As shown in FIG. 7, in an electrode assembly 22 formed by stacking the positive electrode plate 2211, the negative electrode plate 2212, and the separator 2213, typically, four edges of the negative electrode plate 2212 all protrude beyond the positive electrode plate 2211, and four edges of the separator 2213 all protrude beyond the negative electrode plate 2212. It should be noted that in FIG. 7, the spacing between the perimeter of the negative electrode plate 2212 and the perimeter of the positive electrode plate 2211 is relatively large, and the spacing between the perimeter of the separator 2213 and the perimeter of the negative electrode plate 2212 is also relatively large. This is only for the purpose of clearly showing the structure and does not mean that such large spacing exists in the actual electrode assembly 22. The specific spacing can be set according to actual needs. In a stacked electrode assembly 22, the projection region of the positive electrode plate 2211 on the side surface 2201, as shown in FIG. 7, may refer to a region enclosed by dashed lines near the center of the side surface 2201, that is, a region enclosed by dashed lines representing the positive electrode plate 2211.

The first buffer portion 251 at least covers the projection region of the positive electrode plate 2211 on the side surface 2201. It can be understood that the first buffer portion 251 may exactly cover the entire portion of the positive electrode plate 2211 opposite the side surface 2201, or, in addition to fully covering the portion of the positive electrode plate 2211 opposite the side surface 2201, may also cover the portion of the negative electrode plate 2212 protruding beyond the positive electrode plate 2211. For example, as shown in FIGs. 6 to 9, the first buffer portion 251 at least covering the projection region of the positive electrode plate 2211 on the side surface 2201 may mean that the width $H_2$ of the first buffer portion 251 is greater than the width $H_5$ of the positive electrode plate 2211.

In the battery cell 20 of the embodiments of this application, the first buffer portion 251 can fully cover the portion of the positive electrode plate 2211 opposite the side surface 2201, so that the entire central region 22011 corresponding to the positive electrode plate 2211 can compress the first buffer portion 251, thereby more effectively mitigating the expansion force in the central region 22011 and mitigating uneven expansion force distribution across the entire side surface 2201.

In another embodiment of this application, as shown in FIGs. 6 to 9, for the battery cell 20 provided, the buffer member 25 at least covers a projection region of the negative electrode plate 2212 on the side surface 2201.

In a wound electrode assembly 22, the projection region of the negative electrode plate 2212 on the side surface 2201 may refer to the projection region of the flat and straight portion of the negative electrode plate 2212 located in the electrode assembly 22 on the side surface 2201. For example, in FIG. 6, the projection region of the negative electrode plate 2212 on the side surface 2201 may refer to a region enclosed by two vertical solid lines near the center of the side surface 2201 and two dashed lines near the edges of the side surface 2201.

In a stacked electrode assembly 22, the projection region of the negative electrode plate 2212 on the side surface 2201, as shown in FIG. 7, may refer to a region enclosed by dashed lines near the edges of the side surface 2201, that is, a region enclosed by dashed lines representing the negative electrode plate 2212.

The buffer member 25 at least covers the projection region of the negative electrode plate 2212 on the side surface 2201. It can be understood that the buffer member 25 may exactly cover the entire portion of the negative electrode plate 2212 opposite the side surface 2201, or, in addition to fully covering the portion of the negative electrode plate 2212 opposite the side surface 2201, may also cover the separator 2213. For example, as shown in FIGs. 6 to 9, the buffer member 25 at least covering the negative electrode plate 2212 may mean that the width $H_1$ of the buffer member 25 is greater than the width $H_6$ of the negative electrode plate 2212.

In the battery cell 20 of the embodiments of this application, the buffer member 25 can at least fully cover the portion of the negative electrode plate 2212 opposite the side surface 2201, so that the portion of the negative electrode plate 2212 protruding beyond the positive electrode plate 2211 can also compress the buffer member 25, implementing more comprehensive mitigation of the expansion force on the side surface 2201 and improving the effect of mitigating uneven expansion force distribution.

In another embodiment of this application, as shown in FIGs. 6 to 9, for the battery cell 20 provided, a width of the separator 2213 is $H_3$, a width of the buffer member 25 is $H_1$, and -2.5 mm $\leq H_3$-$H_1 \leq$ 14.5 mm.

For the width direction of the separator 2213, for example, reference may be made to the height direction (Z direction) of the electrode assembly 22 in FIG. 6. The width of the separator 2213 refers to a dimension of the separator 2213 in the height direction (Z direction) of the electrode assembly 22. $H_3$-$H_1 \leq 0$ ensures that the edge of the separator 2213 protrudes beyond the buffer member 25. $H_3$-$H_1 \leq$ -2.5 mm ensures that the length by which the separator 2213 protrudes beyond the buffer member 25 is appropriate, allowing the buffer member 25 to cover a large area of the negative electrode plate 2212 and the positive electrode plate 2211, thereby effectively mitigating the expansion force of the electrode assembly 22. $H_3$-$H_1 > 0$ ensures that the edge of the buffer member 25 protrudes beyond the edge of the separator 2213. $H_3$-$H_1 \leq$ 14.5 mm ensures that the buffer member 25 does not protrude excessively beyond the separator 2213, avoiding interference with components such as the end cover 212.

In the battery cell 20 of the embodiments of this application, proper setting of the width $H_1$ of the buffer member 25 allows effective mitigation of the expansion force of the electrode assembly 22, and reduces the risk of interference between the buffer member 25 and the outer shell 21.

In one embodiment, a value of $H_3$-$H_1$ may be, but is not limited to, -2.5 mm, -2 mm, -1.5 mm, -1 mm, -0.5 mm, 0 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, or 14.5 mm.

In another embodiment of this application, as shown in FIGs. 6 to 9, for the battery cell 20 provided, 6.5 mm $\leq H_3$-$H_1 \leq$ 10 mm.

In the battery cell 20 of the embodiments of this application, 6.5 mm $\leq H_3$-$H_1 \leq$ 10 mm ensures that the buffer member 25 protrudes beyond the separator 2213, and the protrusion length is reasonable, neither too short to effectively cover the negative electrode plate 2212 nor too long to increase the risk of interference with components such as the end cover 212.

In one embodiment, a value of $H_3$-$H_1$ may be, but is not limited to, 6.5 mm, 6.6 mm, 6.7 mm, 6.8 mm, 6.9 mm, 7 mm, 7.1 mm, 7.2 mm, 7.3 mm, 7.4 mm, 7.5 mm, 7.6 mm, 7.7 mm, 7.8 mm, 7.9 mm, 8 mm, 8.1 mm, 8.2 mm, 8.3 mm, 8.4 mm, 8.5 mm, 8.6 mm, 8.7 mm, 8.8 mm, 8.9 mm, 9 mm, 9.1 mm, 9.2 mm, 9.3 mm, 9.4 mm, 9.5 mm, 9.6 mm, 9.7 mm, 9.8 mm, 9.9 mm, or 10 mm.

As shown in FIGs. 10 to 13, the buffer member 25 only needs to be in contact with one side surface 2201 of the electrode assembly 22 to mitigate uneven expansion force distribution of the electrode assembly 22.

In another embodiment of this application, as shown in FIGs. 10 to 12, for the battery cell 20 provided, the buffer member 25 is located between the side surface 2201 and the outer shell 21.

The buffer member 25 is located between the side surface 2201 and the outer shell 21. It can be understood that the buffer member 25 is located between the side surface 2201 near the outer shell 21 and the cavity wall of the mounting cavity 2111.

In the battery cell 20 of the embodiments of this application, the buffer member 25 is located between the outer shell 21 and the side surface 2201. When the side surface 2201 expands toward the outer shell 21, it can compress the buffer member 25, thereby mitigating the expansion force of the side surface 2201. One, two, or more buffer members 25 may be provided between the side surface 2201 and the outer shell 21.

In another embodiment of this application, as shown in FIGs. 10, 12, and 13, for the battery cell 20 provided, the electrode assembly 22 is provided in plurality, and the buffer member 25 is located between two adjacent electrode assemblies 22.

In the case of multiple electrode assemblies 22 within the battery cell 20, the buffer member 25 is provided between the opposite side surface 2201 of two adjacent electrode assemblies 22, where one, two, or more buffer members 25 may be provided between two adjacent electrode assemblies 22. A quantity of components of the battery cell 20 may be, but is not limited to, two, three, or four.

In the battery cell 20 of the embodiments of this application, when two adjacent electrode assemblies 22 expand, they can compress the buffer member 25 located therebetween, mitigating the expansion force between the two adjacent electrode assemblies 22, and improving the performance of the battery cell 20.

The following lists some specific embodiments to better illustrate this application.

In one specific embodiment, as shown in FIGs. 3 to 5, the battery cell 20 includes an outer shell 21, a buffer member 25, and two electrode assemblies 22. The outer shell 21 includes an end cover 212 and a housing 211, where the housing 211 is provided with a mounting cavity 2111, and the end cover 212 covers an opening at the upper end of the outer shell 21 to close the mounting cavity 2111, thereby reducing the risk of electrolyte leakage. The buffer member 25 and the two electrode assemblies 22 are all installed in the mounting cavity 2111. The buffer member 25 and the two electrode assemblies 22 are sequentially arranged in a front-to-rear stacked manner, with the buffer member 25 pressing against a front side surface 2201 of the electrode assembly 22 located on the front side. A positive electrode tab 222 and a negative electrode tab 223 are led from the upper end of the electrode assembly 22. The front side surface 2201 includes a central region 22011 in the middle and four edge regions 22012 surrounding the central region 22011. The buffer member 25 includes a first buffer portion 251 and a second buffer portion 252. The first buffer portion 251 and the second buffer portion 252 are arranged vertically, where the second buffer portion 252 presses against the edge region 22012 located at the upper part, and the first buffer portion 251 presses against the central region 22011 and the other three edge regions 22012. The second buffer portion 252 is disposed near the positive electrode tab 222 and the negative electrode tab 223, better mitigating uneven expansion force distribution on the front side surface 2201.

In another specific embodiment, differing from the previous specific embodiment, as shown in FIGs. 6, 7, and 8, the positive electrode plate 2211, the negative electrode plate 2212, and the separator 2213 within the electrode assembly 22 are stacked, with the positive electrode tab 222 extending from the lower end of the positive electrode plate 2211, and the negative electrode tab 223 extending from the upper end of the negative electrode plate 2212. The buffer member 25 includes a first buffer portion 251 and two second buffer portions 252, where the two second buffer portions 252 are respectively connected to the upper edge portion and lower edge portion of the first buffer member 25. The two second buffer portions 252 respectively press against the edge region 22012 near the positive electrode tab 222 and the edge region 22012 near the negative electrode tab 223, and the first buffer portion 251 presses against the central region 22011 between the edge region 22012 near the positive electrode tab 222 and the edge region 22012 near the negative electrode tab 223. The two second buffer portions 252 are disposed near the positive electrode tab 222 and the negative electrode tab 223, better mitigating uneven expansion force distribution on the front side surface 2201.

In another specific embodiment, differing from the previous specific embodiment, as shown in FIGs. 6, 7, and 9, the buffer member 25 includes a first buffer portion 251 and four second buffer portions 252, where the four second buffer portions 252 are respectively connected to the four edge portions of the first buffer portion 251. The four second buffer portions 252 are sequentially connected end to end to be annularly arranged around the first buffer portion 251. The four second buffer portions 252 respectively press against the four edge regions 22012 surrounding the central region 22011, and the first buffer portion 251 presses against the central region 22011, better mitigating uneven expansion force distribution on the side surface 2201.

In another specific embodiment, differing from the above specific embodiments, as shown in FIG. 10 or FIG. 11, a buffer member 25 is provided between the front side surface 2201 of the electrode assembly 22 located on the front side and the outer shell 21, and a buffer member 25 is provided between the rear side surface 2201 of the electrode assembly 22 located on the rear side and the outer shell 21.

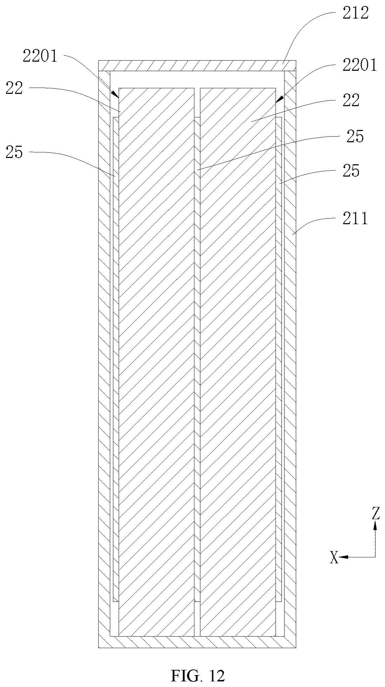

In another specific embodiment, differing from the previous specific embodiment, as shown in FIG. 10 or FIG. 12, the buffer member 25 is provided between two adjacent electrode assemblies 22.

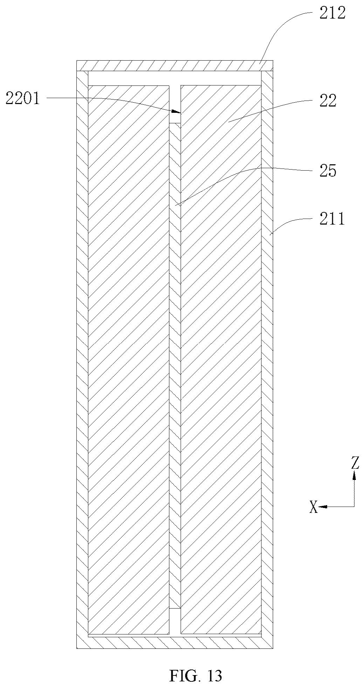

In another specific embodiment, differing from the previous specific embodiment, as shown in FIG. 10 or FIG. 13, a buffer member 25 is provided between two adjacent electrode assemblies 22, while no buffer members 25 are provided in other regions.

In another embodiment of this application, as shown in FIG. 2, a battery 1100 is provided, including the foregoing battery cell 20.

The battery 1100 of the embodiment of this application uses the foregoing battery cell 20. The battery cell 20 has good cycling performance and service life, improving use performance and service life of the battery 1100. The battery 1100 may be the battery 1100 described in any one of the above embodiments.

Since the battery 1100 of the embodiments of this application adopts the technical solution of any one of the above embodiments or a combination of multiple embodiments, it also has all the beneficial effects brought by the technical solutions of the above embodiments, which are not repeated herein.

In another embodiment of this application, an electric apparatus is provided, including the foregoing battery 1100.

The electric apparatus of the embodiment of this application, as shown in FIG. 1, uses the foregoing battery 1100. The battery 1100 has a long service life and good performance, improving performance of the electric apparatus. The electric apparatus may be the battery 1100 according to any one of the above embodiments.

Since the electric apparatus of the embodiment of this application adopts the technical solution of any one of the above embodiments or a combination of multiple embodiments, it also has all the beneficial effects brought by the technical solutions of the above embodiments, which are not repeated herein.

The descriptions of the various embodiments above tend to emphasize the differences between the embodiments, and their similar or identical aspects can be referenced mutually. For brevity, details are not repeated herein.

The above descriptions are only preferred embodiments of this application and are not intended to limit this application. Any modifications, equivalent substitutions, improvements, and the like made within the spirit and principles of this application shall fall within the protection scope of this application.

**Claims**

1. A battery cell, **characterized by**:

     an outer shell having a mounting cavity;
     an electrode assembly located in the mounting cavity, the electrode assembly having a side surface distributed in a thickness direction of the electrode assembly; and
     a buffer member located in the mounting cavity, the buffer member comprising a first buffer portion and a second buffer portion, the first buffer portion having at least one edge portion connected to the second buffer portion, the first buffer portion at least partially covering a central region of the side surface, and the second buffer portion covering an edge region of the side surface,
     wherein under the same pressure, a compression amount of the first buffer portion is greater than a compression amount of the second buffer portion.

2. The battery cell according to claim 1, **characterized in that** under a pressure of 0.5 MPa to 1 MPa, a compression rate of the first buffer portion is greater than or equal to 40%.

3. The battery cell according to claim 2, **characterized in that**:

     under a pressure of 0.5 MPa, the compression rate of the first buffer portion is greater than or equal to 40%; and/or
     under a pressure of 0.8 MPa, the compression rate of the first buffer portion is greater than or equal to 60%; and/or
     under a pressure of 1 MPa, the compression rate of the first buffer portion is greater than or equal to 85%.

4. The battery cell according to any one of claims 1 to 3, **characterized in that** under a pressure of 0.5 MPa to 1 MPa, a compression rate of the second buffer portion is greater than or equal to 20%.

5. The battery cell according to claim 4, **characterized in that**:

     under a pressure of 0.5 MPa, the compression rate of the second buffer portion is greater than or equal to 20%; and/or
     under a pressure of 0.8 MPa, the compression rate of the second buffer portion is greater than or equal to 30%; and/or
     under a pressure of 1 MPa, the compression rate of the second buffer portion is greater than or equal to 50%.

6. The battery cell according to any one of claims 1 to 5, **characterized in that** a porosity of the first buffer portion ranges from 40% to 95%.

7. The battery cell according to claim 6, **characterized in that** the porosity of the first buffer portion ranges from 75% to 90%.

8. The battery cell according to any one of claims 1 to 7, **characterized in that** a porosity of the second buffer portion ranges from 5% to 60%.

9. The battery cell according to claim 8, **characterized in that** the porosity of the second buffer portion ranges from 10% to 40%.

10. The battery cell according to any one of claims 1 to 9, **characterized in that** an elastic modulus of the first buffer portion is less than an elastic modulus of the second buffer portion.

11. The battery cell according to any one of claims 1 to 10, **characterized in that** a material of the first buffer portion is the same as a material of the second buffer portion, or a material of the first buffer portion is different from a material of the second buffer portion.

12. The battery cell according to any one of claims 1 to 11, **characterized in that** an area of the first buffer portion is $S_1$, a sum of areas of all the second buffer portions is $S_2$, and $0.3 \le S_1/(S_1+S_2) \le 0.9$.

13. The battery cell according to claim 12, **characterized in that** $0.5 \le S_1/(S_1+S_2) \le 0.85$.

14. The battery cell according to any one of claims 1 to 13, **characterized in that** a thickness of the first buffer portion in an uncompressed state is greater than a thickness of the second buffer portion in an uncompressed state.

15. The battery cell according to any one of claims 1 to 14, **characterized in that** a thickness of the mounting cavity is $T_1$, a thickness of the electrode assembly is $T_2$, a quantity of the electrode assemblies is $N_1$, a quantity of the buffer members is $N_2$, and the thickness of the first buffer portion in an uncompressed state is $T_3$, wherein $0.85 \le (N_1{*}T_2+N_2{*}T_3)/T_1 \le 0.95$.

16. The battery cell according to any one of claims 1 to 15, **characterized in that** a width of the buffer member is $H_1$, a width of the first buffer portion is $H_2$, and $3.5$ mm $\le H_1\text{-}H_2 \le 5.5$ mm.

17. The battery cell according to any one of claims 1 to 16, **characterized in that**:

   any one edge portion of the first buffer portion is connected to the second buffer portion; or
   two adjacent edge portions of the first buffer portion are each connected to the second buffer portion; or
   two opposite edge portions of the first buffer portion are each connected to the second buffer portion; or
   any three edge portions of the first buffer portion are each connected to the second buffer portion; or
   four edge portions of the first buffer portion are each connected to the second buffer portion.

18. The battery cell according to any one of claims 1 to 16, **characterized in that**:

   the electrode assembly comprises a main body portion, a positive electrode tab, and a negative electrode tab, the positive electrode tab and the negative electrode tab being connected to a same end of the main body portion; and
   an edge portion of the first buffer portion near the positive electrode tab is connected to the second buffer portion.

19. The battery cell according to any one of claims 1 to 16, **characterized in that**:

   the electrode assembly comprises a main body portion, a positive electrode tab, and a negative electrode tab;
   the main body portion has a first end and a second end arranged opposite each other, the first end being connected to the positive electrode tab, and the second end being connected to the negative electrode tab; and
   an edge portion of the first buffer member near the positive electrode tab is connected to the second buffer portion, and an edge portion of the first buffer member near the negative electrode tab is connected to the second buffer portion.

20. The battery cell according to claim 19, **characterized in that** another two opposite edge portions of the first buffer portion are each connected to the second buffer portion.

21. The battery cell according to claim 20, **characterized in that** the four second buffer portions are sequentially connected end to end to be annularly arranged around the first buffer portion.

22. The battery cell according to any one of claims 18 to 21, **characterized in that**:

   the main body portion comprises a positive electrode plate, a negative electrode plate, and a separator, the positive electrode plate, the negative electrode plate, and the separator being wound or stacked;
   the positive electrode plate is connected to the positive electrode tab, and the negative electrode plate is connected to the negative electrode tab; and
   the first buffer portion at least covers a projection region of the positive electrode plate on the side surface.

23. The battery cell according to claim 22, **characterized in that** the buffer member at least covers a projection region of the negative electrode plate on the side surface.

24. The battery cell according to claim 22 or 23, **characterized in that** a width of the separator is $H_3$, a width of the buffer member is $H_1$, and $-2.5$ mm $\leq H_3\text{-}H_1 \leq 14.5$ mm.

25. The battery cell according to claim 24, **characterized in that** 6.5 mm $\leq H_3\text{-}H_1 \leq 10$ mm.

26. The battery cell according to any one of claims 1 to 25, **characterized in that** the buffer member is located between the side surface and the outer shell.

27. The battery cell according to any one of claims 1 to 26, **characterized in that** the electrode assembly is provided in plurality, and the buffer member is located between two adjacent electrode assemblies.

28. A battery, **characterized by** the battery cell according to any one of claims 1 to 27.

29. An electric apparatus, **characterized by** the battery according to claim 28.

EP 4 672 473 A1

FIG. 1

FIG. 2

FIG. 3

FIG. 4

FIG. 5

FIG. 6

22

223

22012
22011

2213
2212
2211

$H_3$ $H_5$ $H_6$

$221\begin{cases}2211 \\ 2212 \\ 2213\end{cases}$

$2201\begin{cases}22011 \\ 22012\end{cases}$

222

Z

Y

FIG. 7

25

252

$H_4$

251

$H_1$ $H_2$

$H_4$

252

Z

Y

FIG. 8

25

FIG. 9

20

FIG. 10

FIG. 11

FIG. 12

FIG. 13

## INTERNATIONAL SEARCH REPORT

| International application No. |
| --- |
| **PCT/CN2024/070826** |

| A. | CLASSIFICATION OF SUBJECT MATTER |
| --- | --- |

H01M50/40(2021.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 缓冲, 中心, 中间, 中部, 压缩量, batter+, cell?, core, buffer, middle, compressible, amount

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115832540 A (NINGDE CONTEMPORARY AMPEREX TECHNOLOGY CO., LTD.) 21 March 2023 (2023-03-21) description, paragraphs 70-149, and figures 1-12 | 1-29 |
| Y | CN 217114555 U (CALB GROUP CO., LTD.) 02 August 2022 (2022-08-02) description, paragraphs 6-13, and figures 1-5 | 1-29 |
| Y | CN 215644764 U (SVOLT ENERGY TECHNOLOGY CO., LTD.) 25 January 2022 (2022-01-25) description, paragraphs 3-16, and figures 1-6 | 1-29 |
| A | JP 2016143515 A (TOYOTA INDUSTRIES CORP.) 08 August 2016 (2016-08-08) entire document | 1-29 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 March 2024** | **01 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070826**

| Patent document cited in search report | | | Publication date (day/month/year) | Patent family member(s) | | | Publication date (day/month/year) |
|---|---|---|---|---|---|---|---|
| CN | 115832540 | A | 21 March 2023 | WO | 2023061105 | A1 | 20 April 2023 |
| | | | | EP | 4329064 | A1 | 28 February 2024 |
| CN | 217114555 | U | 02 August 2022 | None | | | |
| CN | 215644764 | U | 25 January 2022 | None | | | |
| JP | 2016143515 | A | 08 August 2016 | JP | 6520156 | B2 | 29 May 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310551386